# EUROPÄISCHE PATENTANMELDUNG

(11) **EP 1 157 866 A2**
(43) Veröffentlichungstag der Anmeldung: **28.11.2001**
(21) Anmeldenummer: 01110544.2
(22) Anmeldetag: 28.04.2001
(51) Int. Cl.: B60H 1/00

(54) **Klimaanlage für ein Fahrzeug**

(30) Priorität: 03.05.2000 DE 10021484
(71) Anmelder: Behr-Hella Thermocontrol GmbH, D-70469 Stuttgart (DE)
(72) Erfinder: Krapf, Ute, 59557 Lippstadt (DE); Moersch, Volker, 59555 Lippstadt (DE); Engelhardt, Günter, 85080 Gaimersheim (DE)

(57) **Zusammenfassung**

Bei der Klimaanlage (10) für ein Fahrzeug (12) wird eine Kühlvorrichtung (22) mit steuerbarer Kühlleistung verwendet. Erfindungsgemäß wird die Kühlleistung derart eingestellt, dass die zum Aufheizen der vorgekühlten Luft erforderliche Wärmeenergie möglichst gering ist. Dieses Minimum an Wärmeenergie wird unter dem Aspekt festgelegt, dass weiterhin eine gute Regelbarkeit der Ausblastemperatur gegeben ist. Mit anderen Worten wird ganz bewusst Wärmeenergie eingebracht, die Luft also auf einen niedrigeren Temperaturwert als die Sollausblastemperatur vorgekühlt, denn nur bei dieser Vorgehensweise ist garantiert, dass sich das Steilglied der Heizvorrichtung in einem Bereich befindet, der auch in Richtung auf eine Verringerung der Wärmeenergie noch ausreichend große Verstellmöglichkeiten bietet, so dass die Ausblastemperatur gut regelbar bleibt. Damit ist es gelungen, die Klimaanlage (10) trotz minimiertem Energieverbrauch bei hohem Regelungskomfort zu betreiben.

## Beschreibung

Die Erfindung betrifft eine Klimaanlage für ein Fahrzeug.

Fahrzeug-Klimaanlagen sind mit einer Kühlvorrichtung und einer Heizvorrichtung zum Temperieren der dem Innenraum des Fahrzeuges zuzuführenden Luft versehen. Beide Vorrichtungen lassen sich über Stellglieder in ihrer Kühlbzw. Heizleistung einstellen. Die gewünschte Innenraumtemperatur lässt sich über einen Sollwertgeber vorgeben, der im Regelfall im Steuergerät der Klimaanlage untergebracht ist. Die Innenraumtemperaturregelung selbst wird von einer Steuereinheit ausgeführt, die Signale von dem Sollwertgeber (und im Regelfall auch von einem Innenraumtemperaturfühler) empfängt und an die Stellglieder der Kühl- und Heizvorrichtungen Ansteuerungssignale ausgibt.

Die konventionellen Klimasysteme für Fahrzeuge arbeiten nach dem sogenannten Reheat-Verfahren. Dabei wird Frischluft mittels der Kühlvorrichtung zunächst auf ein niedriges, in den meisten Betriebsfällen fest eingestelltes Temperaturniveau zwischen 0 und +3°C vorgekühlt. Anschließend erfolgt in der stromabwärts der Kühlvorrichtung angeordneten Heizvorrichtung die Erwärmung der "vorgekühlten" Frischluft bis auf ein Ausblastemperaturniveau, das zum Erreichen bzw. Aufrechterhalten der gewünschten Innenraumtemperatur erforderlich ist.

Von der technischen Seite betrachtet, ist das Reheat-Verfahren insoweit sinnvoll, als durch die Vorkühlung der Frischluft deren Entfeuchtung erzielt werden kann, was unter sicherheitstechnischen Aspekten den Vorteil bietet, dass die Gefahr der Betauung der Windschutzscheibe verringert ist. Außerdem wird durch eine ausreichende Entfeuchtung der dem Innenraum zugeführten Luft bzw. der Luft im Innenraum des Fahrzeuges der Klimakomfort gesteigert, da dadurch dem Entstehen einer "Treibhausatmosphäre" im Innenraum entgegengewirkt wird.

Um die beiden zuvor genannten Bedingungen erfüllen zu können, ist es jedoch in einer Vielzahl von Betriebsfällen nicht erforderlich, die Frischluft auf das oben beschriebene relativ niedrige und zumeist fest eingestellte Temperaturniveau abzukühlen. Schließlich ist eine weniger starke Vorkühlung der Frischluft auch unter energetischen Aspekten und unter Aspekten der Umweltfreundlichkeit von Vorteil. Denn wenn es gelingt, die Frischluft lediglich auf ein Temperaturniveau abkühlen zu müssen, das sich im Bereich der Ausblastemperatur bewegt, ohne dass der Klimakomfort spürbare Einbußen erleidet, so könnte man die Betriebskosten (Energieverbrauchswerte) der Fahrzeug-Klimaanlage minimieren.

In DE 37 24 430 A1 ist bereits eine Klimaanlage beschrieben, bei der sich die der Kühlvorrichtung an die Luft abzugebende Kühlleistung an der Größe der Außentemperatur orientiert. Bei der bekannten Klimaanlage wird auf die als "gleitende Kälteregelung" bezeichnete Betriebsart umgeschaltet, wenn die Außentemperatur größer ist als die gewünschte Innenraumtemperatur. In dieser Betriebsart wird die Kühlvorrichtungstemperatur, bei einem Kältekreislauf mit Kompressor und Verdampfer also die Verdampfertemperatur, in Abhängigkeit von der Regelabweichung zwischen der Solltemperatur und der Isttemperatur für den Innenraum eingestellt. Liegt die Außentemperatur unterhalb der gewünschten Innenraumtemperatur, so wird die Verdampfertemperatur auf einen Wert eingestellt, der um einen konstanten Betrag unterhalb der Außentemperatur liegt (sogenannter moderater Reheat-Betrieb). Eine alternative Vorgehensweise im moderaten Reheat-Betrieb besteht bei der bekannten Klimaanlage darin, die Verdampfertemperatur auf einen Wert einzustellen, der um einen festen Betrag unterhalb des Sollwerts für die Innenraumtemperatur liegt.

Die Steuerung der Verdampfertemperatur auf einen um einen festen Betrag unterhalb der Außentemperatur bzw. der gewünschten Innenraumtemperatur liegenden Wert führt auf der einen Seite zu vergleichsweise einfach zu implementierenden Regelungskonzepten, erweist sich jedoch insoweit als noch optimierbar, als der Energieverbrauch der Klimaanlage in einer Vielzahl von Betriebsfällen noch weiter reduziert werden kann, wenn andererseits gewährleistet werden kann, dass die Gefahr der Beschlagsneigung und Komforteinbuβen nicht gegeben ist.

Der Erfindung liegt daher die Aufgabe zugrunde, eine Fahrzeug-Klimaanlage zu schaffen, deren Energieverbrauch unter Einhaltung sicherheitstechnischer und Komfortvorgaben minimal ist.

Zur Lösung dieser Aufgabe wird mit der Erfindung eine Klimaanlage für ein Fahrzeug vorgeschlagen, die versehen ist mit
- einer Kühlvorrichtung zum Kühlen von Luft,
- einer stromab der Kühlvorrichtung angeordneten Heizvorrichtung zum Erwärmen der von der Kühlvorrichtung gekühlten und dem Innenraum des Fahrzeuges zuzuführenden Luft,
- einem ersten Stellglied für die Kühlvorrichtung zum Verändern der Temperatur der von der Kühlvorrichtung gekühlten Luft,
- einem zweiten Stellglied für die Heizvorrichtung zum Verändern der Temperatur der von der Heizvorrichtung erwärmten Luft,
- einer zumindest wahlweise eine energieoptimierte Ausblastemperaturregelung durchführende Steuereinheit, die mit den beiden Stellgliedern verbunden ist und diese Stellglieder derart ansteuert, dass die in den Innenraum des Fahrzeuges einströmende Luft eine gewünschte Sollausblastemperatur aufweist.

Bei dieser Klimaanlage ist erfindungsgemäß vorgesehen, dass die Steuereinheit
- eine Kühlvorrichtungs-Solltemperatur für die von der Kühlvorrichtung gekühlte Luft vorgibt, wobei diese Kühlvorrichtungs-Solltemperatur um einen vorbestimmten Betrag geringer ist als die zu Beginn der energieoptimierten Ausblastemperaturregelung einzuhaltende Sollausblastemperatur,
- einen oberen und einen unteren Grenzwert für den Wärmebedarf vorgibt, der in der Heizvorrichtung der von der Kühlvorrichtung gekühlten Luft zuzuführen ist, um diese Luft bis auf die Sollausblastemperatur zu erwärmen,
- das Stellglied der Kühlvorrichtung derart ansteuert, dass die von der Kühlvorrichtung gekühlte Luft die Kühlvorrichtungs-Solltemperatur aufweist,
- das Stellglied der Heizvorrichtung derart ansteuert, dass der von der Kühlvorrichtung gekühlten Luft der zur Erwärmung bis auf die Sollausblastemperatur erforderliche Istwärmebedarf zugeführt wird, dann, wenn der Istwärmebedarf kleiner als der untere Grenzwert ist, die Kühlvorrichtungs-Solltemperatur um ein vorgebbares Maß verringert und
- dann, wenn der Istwärmebedarf größer als der obere Grenzwert ist, die Kühlvorrichtungs-Solltemperatur um ein vorgebbares Maß erhöht.

Die erfindungsgemäße Klimaanlage lässt sich in einem energieoptimierten bzw. Energiesparmodus betreiben, in dem der Energieverbrauch der Kühlvorrichtung minimiert ist. Das heißt, das in dem energieoptimierten Betrieb der Klimaanlage der Entfeuchtungsgrad der Frischluft geringer ist als derjenige Entfeuchtungsgrad, der sich einstellt, wenn die Kühlvorrichtung bei maximaler Kühlleistung arbeitet. Die Klimaanlage sollte beispielsweise bei maximaler Kühlleistung der Kühlvorrichtung arbeiten, wenn aus Gründen der aktuellen Umweltparameter und der Innenraumtemperaturvorgabe ein Entfeuchtungsmanagement notwendig erscheint. Da die Erfindung jedoch in erster Linie den energieoptimierten Betrieb der Klimaanlage zum Gegenstand hat, soll auf die Maßnahmen und den Betrieb der Klimaanlage beim Entfeuchtungsmanagement nur am Rande eingegangen werden.

Bei der erfindungsgemäßen Klimaanlage ist bei der energieoptimierten Ausblastemperaturregelung (energieoptimierte Betriebsart) der Betrag, um den die Kühlvorrichtungstemperatur (nachfolgend auch Verdampfertemperatur genannt) nach unten von der zum Erreichen bzw. Aufrechterhalten der gewünschten Innenraumtemperatur erforderlichen Sollausblastemperatur liegt, variabel. Damit können bei der erfindungsgemäßen Klimaanlage externe Faktoren wie z. B. die Außenerwärmung und die Motorabwärme, die sich auf das Luftführungssystem der Klimaanlage und damit auf die Temperatur der Luftströmung auswirkt, dynamisch berücksichtigt werden. Zu Beginn des Vorgangs der energieoptimierten Ausblastemperaturregelung wird die Verdampfertemperatur auf einen Wert eingestellt, der um einen vorbestimmten Betrag von einigen wenigen °C, beispielsweise bis zu 5°C unterhalb der Sollausblastemperatur liegt. Die Steuereinheit steuert also das Stellglied der Kühlvorrichtung entsprechend an und steuert daneben auch das Stellglied der Heizvorrichtung so an, dass sich in der dem Innenraum des Fahrzeuges zuzuführenden Luftströmung das Sollausblastemperaturniveau einstellt. Damit während der energieoptimierten Innenraumtemperaturregelung noch in ausreichendem Maße auf Störgrößen (Veränderung der Außentemperatur und/oder der Sonneneinstrahlung und/oder Innenraumtemperatur-Sollwertänderungen) reagiert werden kann, so dass es nicht zu spürbaren Komforteinbußen kommt, muss sich das Stellglied der Heizvorrichtung innerhalb eines Bereichs seines Verstellweges befinden, der dem Stellglied in beiden Bewegungsrichtungen ausreichenden Bewegungsspielraum lässt. Für eine luftseitig gesteuerte Heizvorrichtung bedeutet dies, dass sich die Mischklappe, die durch ihre Stellung das Verhältnis aus nicht durch einen Wärmetauscher aufgeheizter Luftströmung und durch den Wärmetauscher aufgeheizter Luftströmung bestimmt, in einem Verstellbereich befindet, in dem sie den von dem Wärmetauscher kommenden Luftstrom in wenn auch geringem Maße noch passieren lässt. Auf diese Weise kann also durch Bewegung der Mischklappe in Richtung des weiteren Abschottens des von dem Wärmetauscher kommenden Luftstroms noch auf Störgrößen reagiert werden, die es z. B. bei unveränderter Ausblastemperaturvorgabe erforderlich machen, die Temperatur der in den Innenraum einströmende Luft (geringfügig) zu verringern.

Mit anderen Worten wird also bei der erfindungsgemäßen Klimaanlage davon ausgegangen, dass es eines gewissen Wärmebedarfes an der von der Kühlvorrichtung gekühlten Luft bedarf. Dieser Wärmebedarf ist z. B. abhängig von der Strömungsgeschwindigkeit und dem Temperaturunterschied zwischen Verdampfertemperatur und Ausgangstemperatur. Allerdings sollte dieser Wärmebedarf unter energetischen Aspekten nicht zu groß und unter Aspekten des Klimakomforts nicht zu klein sein. Der tatsächliche Wärmebedarf sollte also innerhalb eines durch obere und untere Grenzwerte definierten Bereichs liegen. Daher wird nach der Erfindung die Verdampfertemperatur derart gesteuert, dass der erforderliche Wärmebedarf zum Erwärmen der auf die gesteuerte Verdampfertemperatur abgekühlten Luft nach dem Verlassen des durch die unteren und oberen Grenzwerte definierten Wärmebedarfbereichs wieder innerhalb dieses Wärmebedarfbereichs liegt. Die Steuereinheit wirkt dabei dergestalt auf die Verdampfertemperatur ein, dass diese um ein vorgebbares Maß pro Zeiteinheit kontinuierlich oder stufenweise verringert wird, wenn der Istwärmebedarf kleiner ist als der untere Grenzwert. Umgekehrt erhöht die Steuereinheit kontinuierlich oder in Stufen die Verdampfertemperatur um ein vorgebbares Maß, wenn der Istwärmebedarf größer ist als der obere Grenzwert. Im erstgenannten Fall wird also in der Steuereinheit festgestellt, dass der vorgekühlten Luft weniger Energie zugeführt wird, als es für eine auf Störgrößen noch komfortabel reagierenden Einstellung des Stellgliedes erforderlich wäre. Da bei der Erfindung trotz des Wunsches nach Minimierung des Energieverbrauchs dennoch auch für eine weiterhin komfortable Innenraumtemperaturregelung Sorge getragen wird, wird also hier zu Gunsten einer Komfortsteigerung im Hinblick auf eine schnelle und ausreichende Ausregelung von Störgrößen der Energiebedarf geringfügig erhöht. Im zweitgenannten Fall dagegen ist der Energieeintrag in die Heizvorrichtung höher als zum Ausregeln der zu erwartenden Störgrößen erforderlich, so dass Energie durch Erhöhung der Verdampfertemperatur und damit einhergehend durch Verringerung der Heizleistung der Heizvorrichtung eingespart werden kann, ohne dass darunter der Klimakomfort spürbar leidet.

Die erfindungsgemäße Klimaanlage schafft also einen Kompromiss zwischen den an sich widerstreitenden Anforderungen an einerseits einen geringen Energieverbrauch und andererseits ein Mindestmaß an Klimakomfort.

Wie bereits oben erwähnt, erfolgt nach der Erfindung eine Verstellung der Verdampfertemperatur in Abhängigkeit davon, ob der Istwärmebedarf innerhalb eines vorgegebenen gewünschten Wärmebedarfsbereichs liegt. Hierzu ist es nicht erforderlich, den Istwärmebedarf tatsächlich rechnerisch zu ermitteln. Vielmehr reicht es aus, die Stellung des Stellgliedes der Heizvorrichtung zu detektieren, wobei dem Wärmebedarfsbereich ein bestimmter Verstellwegbereich des Stellgliedes entspricht. Im Falle einer luftseitig gesteuerten Heizvorrichtung ist das Stellglied als Mischklappe ausgebildet, wie oben beschrieben. Damit reduziert sich die Ermittlung des Istwärmebedarfs und der Vergleich, ob dieser Istwärmebedarf innerhalb des vorgegebenen Wärmebedarfbereichs liegt, auf die Fragestellung, ob sich die Mischklappe in einem vorgegebenen Winkelbereich befindet. Wird dieser Winkelbereich in Richtung eines weiteren Verschließens des von dem Wärmetauscher kommenden Luftstroms verlassen, so wird, um dem entgegen zu wirken, die Verdampfertemperatur verringert; wenn dagegen der Mischklappenwinkelbereich in Richtung auf Schwenkstellungen verlassen wird, in denen der Anteil an von dem Heizaggregat kommenden Luftströmung vergrößert ist, so wird dem entgegen gewirkt, indem die Verdampfertemperatur erhöht wird. Bei einer wasserseitig gesteuerten Heizvorrichtung ist das Stellglied ein den Motorkühlwasserstrom durch einen Wärmetauscher steuerndes Ventil, das analog oder getaktet angesteuert wird. Dem einzuhaltenden Wärmebedarfsbereich entspricht hier also ein Öffnungsstellungsbereich bzw. ein Bereich des EIN/AUS-Verhältnisses des Ventils. Die Veränderung der Verdampfertemperatur erfolgt kontinuierlich oder stufenweise. Ferner ist es zweckmäßig, wenn die Veränderung erst mit einer gewissen Verzögerungszeit durchschlägt. Auf diese Weise kann einem ungewollten Schwingen des Systems entgegengetreten werden. Das Ausmaß der Veränderung sollte nicht zu groß sein; denkbar sind hier Veränderungen von einigen wenigen °C/min und insbesondere 0,3°C/min bis 1,0°C/min. Diese Veränderung sollte ebenfalls nicht in einer Stufe durchgeführt werden; vielmehr ist es zweckmäßig, dann, wenn die Abweichung des Istwärmebedarfs vom Wärmebedarfsbereich für einige zig Sekunden detektiert wird, die Verdampfertemperatur um den entsprechenden Bruchteil zu verändern, der dem oben angegebenen Maß an Veränderung entspricht. Bei einem Veränderungsmaß von beispielsweise 1°C pro Minute ist es z. B. möglich, nach jeweils 20 Sekunden, für die eine Abweichung des Istwärmebedarfs vom Wärmebedarfsbereich festgestellt wird, die Verdampfertemperatur um 1/3°C zu verändern. Je geringer die Zeitintervalle sind, um so geringer sollte die Temperaturveränderung sein. Man nähert sich auf diese Weise einer quasi kontinuierlichen Temperaturveränderung mit vergleichsweise geringer Steigung an.

Physikalisch bedingt kann die Verdampfertemperatur höchstens gleich der Sollausblastemperatur sein. Anderenfalls würde nämlich die Innenraumtemperaturregelung nicht mehr zu dem gewünschten Ergebnis führen, das heißt, es könnte nicht mehr auf die Solltemperatur, die ja eine bestimmte Sollausblastemperatur bedingt, ausgeregelt werden. Der zweite Grenzwert, das heißt die maximal zulässige Abweichung der Verdampfertemperatur von der Sollausblastemperatur nach unten, liegt vorteilhafterweise bei einigen wenigen °C bis einigen wenigen zig °C und vorteilhafterweise zwischen 5°C und 10°C. Sollte sich im Verlauf der Innenraumtemperaturregelung herausstellen, dass die Verdampfertemperatur noch weiter gegenüber der Sollausblastemperatur abgesenkt werden muss, damit die Innenraumtemperatur auf dem Sollwert ausgeregelt ist, so wird der energieoptimierte Betrieb der Klimaanlage verlassen.

Vorstehend ist die Erfindung für den Fall beschrieben, dass für den gesamten Innenraum des Fahrzeuges ein (einziger) Temperaturwert vorgegeben werden kann. Bei Klimaanlagen mit fahrer- und beifahrerseitiger Temperaturregelung oder gar bei Vier-Quadrant-Klimaanlagen lassen sich jedoch mehr als ein Sollwert für unterschiedliche Bereiche des Innenraums des Fahrzeuges vorgeben. Die Erfindung ist selbstverständlich in gleicher Weise auch bei diesen Klimaanlagen verwendbar.

Nachfolgend wir die Erfindung anhand der Figuren näher erläutert. Im einzelnen zeigen:
Fig. 1 eine Seitenansicht des vorderen Teils eines Pkw mit eingebauter Klimaanlage und
Fig. 2 ein Flussdiagramm zur Verdeutlichung der Regelung der Verdampfertemperatur zur Minimierung des Energieverbrauchs der Klimaanlage bei maximal möglichem Klimakomfort.

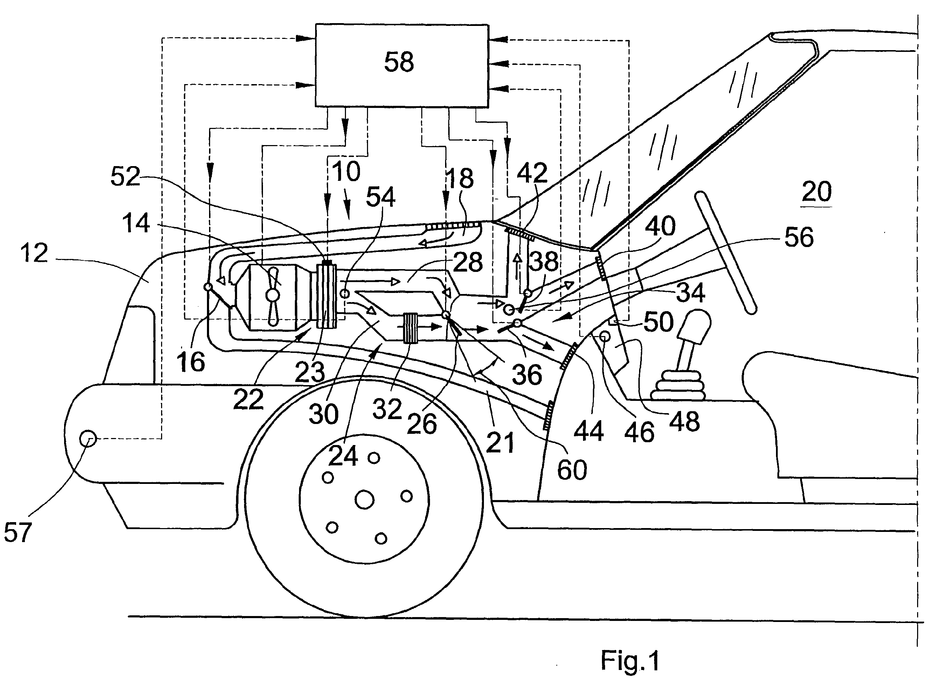

Gemäß Fig. 1 weist eine Klimaanlage 10 für ein Kraftfahrzeug 12 ein Gebläse 14 auf, das in Abhängigkeit von der Stellung einer Frischluft-/Umluftklappe 16 Frischluft aus einem Frischluft-Ansaugkanal 18 oder Umluft aus einem im Innenraum 20 endenden Umluftkanal 21 ansaugt. In Strömungsrichtung betrachtet hinter dem Gebläse 14 befindet sich eine Kühlvorrichtung 22, die einen (nicht dargestellten) Kompressor und einen Verdampfer 23 zum Abkühlen der Ansaugluft aufweist. Hinter dem Verdampfer 23 ist eine (in diesem Beispiel luftseitig gesteuerte) Heizvorrichtung 24 angeordnet. Die abgekühlte Luft durchströmt in Abhängigkeit von der Stellung einer das Stellglied der Heizvorrichtung 24 bildenden Mischklappe 26 einen von zwei zueinander parallel geschalteten Kanälen 28,30 der Heizvorrichtung 24. Einer dieser beiden Kanäle (im Ausführungsbeispiel der Kanal 30) weist einen von einem Teil des Motorkühlwassers durchströmten Wärmetauscher 32 zum Erwärmen der zuvor abgekühlten Luft auf. Hinter dem Wärmetauscher 32 sind die beiden Kanäle 28,30 wieder zusammengeführt. In Strömungsrichtung hinter der Mischklappe 26 schließt sich eine Luftverteilvorrichtung 34 an, die zwei Klappen 36,38 aufweist, um die Luft wahlweise über die Mannanströmöffnungen 40, die Defrosteröffnungen 42 und/oder die Fußraumausströmöffnungen 44 in den Innenraum 20 einzulassen.

Die Steuerung der gesamten Klimaanlage 10 erfolgt dergestalt, dass eine vorgebbare Solltemperatur für den Innenraum 20 erreicht und gehalten wird. Zu diesem Zweck weist die Klimaanlage 10 einen Innenraum-Temperaturfühler 46 auf, der den Istwert der Innenraumtemperatur misst und z. B. im Steuergerät 48 untergebracht ist. Das Steuergerät 48 verfügt über eine Einstellvorrichtung 50 zur manuellen Vorgabe des Sollwerts für die Innenraumtemperatur.

Bei der hier zu beschreibenden Klimaanlage 10 wird eine Kühlvorrichtung 22 mit regelbarem Verdampfer 23 verwendet, der als Stellglied (bei 52 angedeutet) z. B. eine den Kühlmittelfluss steuernde Taumelscheibe aufweist. Die Verdampfertemperatur wird mittels eines Temperaturfühlers 54 gemessen; die Temperatur der dem Innenraum 20 zuzuführenden temperierten Luft wird mittels eines Ausblastemperaturfühlers 56 gemessen.

Darüber hinaus weist die Klimaanlage 10 eine weitere Vielzahl von hier nicht näher beschriebenen und in Fig. 1 teilweise nicht dargestellten Sensoren für beispielsweise die Außentemperatur (Sensor 57), die Kühlwassertemperatur, Schadstoffkonzentration in der Frischluft, etc. auf. Sämtliche dieser Sensoren sind mit einer zentralen Steuereinheit 58 verbunden, die zumindest einen Ausblastemperaturregler und insbesondere einen Innenraumtemperaturregler mit unterlagerter Ausblastemperaturregelung aufweist und ihrerseits mit den Stellgliedern für die Kühlvorrichtung 22, die Heizvorrichtung 24, das Gebläse 14 sowie die Klappen 16,26,36,38 verbunden ist.

Die Klimaanlage gemäß Fig. 1 verfügt über mindestens zwei Betriebsarten, auf die wahlweise umgeschaltet wird. Bei der einen Betriebsart handelt es sich um eine in Bezug auf den Energieverbrauch und den Regelungskomfort optimierte erste Betriebsart (energieoptimierte Innenraumtemperaturregelung), während die zweite Betriebsart insoweit nicht als energieoptimiert bezeichnet werden kann, als die Kühlleistung des Verdampfers 23 derart groß ist, dass eine ein Beschlagen der Innenseite der Windschutzscheibe zuverlässig verhindernde Entfeuchtung der Ansaugluft erfolgt. Nachfolgend wird in erster Linie Bezug genommen auf die energieoptimierte Innenraumtemperaturregelung gemäß der ersten Betriebsart.

Die energieoptimierte Innenraumtemperaturregelung der Klimaanlage 10 zeichnet sich durch eine Regelung der Verdampfertemperatur aus, die auf einen solchen Wert geregelt wird, dass die zum Erwärmen der Luft bis auf die Ausblastemperatur erforderliche Heizleistung einerseits zur Minimierung des Energieverbrauchs so gering wie möglich und andererseits zur Ausregelung von sich auf die Innenraumtemperaturregelung auswirkenden Störgrößen noch ausreichend groß ist. Dies wird bei der hier beschriebenen Klimaanlage 10 dadurch erreicht, dass die Verdampfertemperatur iterativ und adaptiv derart geregelt wird, dass sich die Mischklappe 26 innerhalb des mit 60 gekennzeichneten Verstellbereichs befindet, in dem der mit dem Wärmetauscher 32 versehene Kanal 30 soweit abgeschottet ist, das die Menge an durch den Wärmetauscher 32 erwärmter Luft minimiert ist, dieser Strömungsanteil jedoch durch weiteres Schließen des Kanals 30 durch die Mischklappe 26 so weit reduziert werden kann, dass auf sich auf die Innenraumtemperaturregelung auswirkende Störgrößen wie beispielsweise Sonneneinstrahlung noch komfortabel reagiert werden kann.

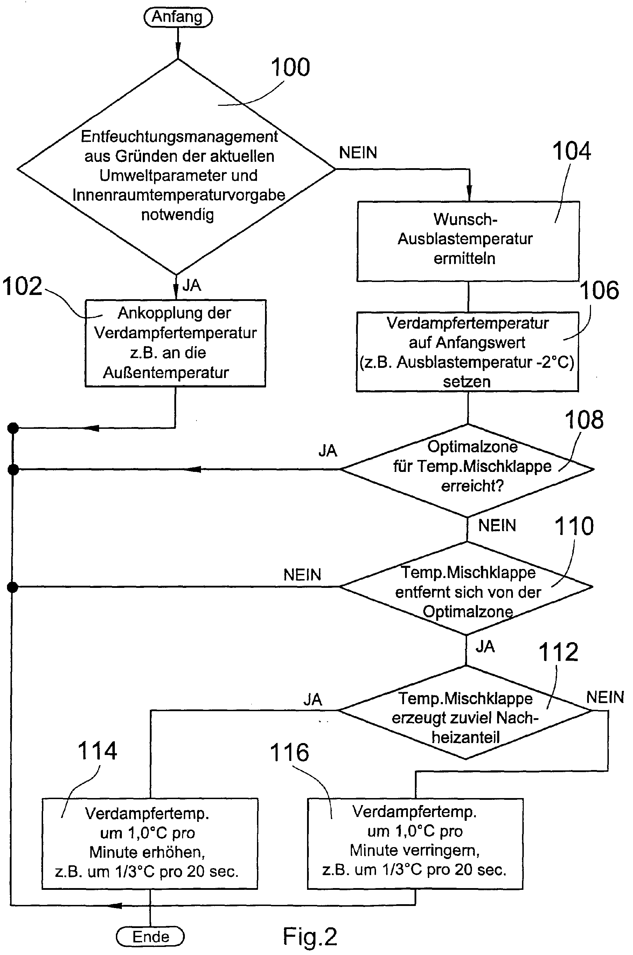

Die Arbeitsweise der Klimaanlage 10 wird nachfolgend anhand des Flussdiagramms der Fig. 2 erläutert.

Zunächst wird im Schritt 100 entschieden, ob es aus Gründen der aktuellen Umweltparameter und der Innenraumtemperaturvorgabe notwendig ist, die Luft zur Vermeidung eines Beschlagens der Windschutzscheibe in besonders starkem Maße zu entfeuchten. Sofern dies erforderlich ist, wird mit Schritt 102 fortgefahren und die Verdampfertemperatur zum Beispiel in Abhängigkeit von der Außentemperatur geregelt oder auf einen festen Betrag zwischen z. B. 0°C und 3°C eingestellt. Von Schritt 102 gelangt man zum Ende, um von dort aus beim Anfang wieder zu beginnen. Dieses Procedere wird so lange fortgeführt, bis auf Grund veränderter Umweltparameter oder einer veränderten Innenraumtemperaturvorgabe in Schritt 100 festgestellt wird, dass ein Entfeuchtungsmanagement zur Verhinderung des Beschlagens der Windschutzscheibe nicht mehr notwendig ist. Dann gelangt man von Schritt 100 zu Schritt 104, in dem eine Wunsch- bzw. Sollausblastemperatur ermittelt wird, bei der sich im Innenraum 20 des Fahrzeuges das gewünschte Temperaturniveau einstellt. Anschließend wird im Schritt 106 die Verdampfertemperatur auf einen Anfangswert gesetzt, der beispielsweise um bis zu 4°C und in diesem Ausführungsbeispiel um beispielsweise 2°C unterhalb der in Schritt 104 ermittelten Ausblastemperatur liegt.

Auf Grund der somit vorgegebenen Verdampfertemperatur stellt sich nun die Mischklappe 26 so ein, wie es zum Aufheizen der Luft bis auf die im Schritt 104 ermittelte Ausblastemperatur erforderlich ist. In Schritt 108 wird abgefragt, ob sich die Mischklappe 26 innerhalb der Optimalzone gemäß dem Bereich 60 der Fig. 1 befindet. Ist dies der Fall, so treten keine Veränderungen bzgl. der Verdampfertemperatur ein. Mit anderen Worten wird also die Verdampfertemperatur beibehalten.

Wird dagegen in Schritt 108 erkannt, dass die Mischklappe 26 ihre Optimalzone 60 nicht erreicht hat, so wird in Schritt 110 überprüft, ob sie sich von der Optimalzone 60 in einer der beiden Richtungen entfernt. Ist dies nicht der Fall, so bleibt die Verdampfertemperatur wiederum unverändert beibehalten.

Wird dagegen in Schritt 110 erkannt, dass sich die Mischklappe 26 aus der Optimalzone 60 entfernt, so wird zunächst in Schritt 112 festgestellt, in welche Richtung sie sich aus der Optimalzone 60 entfernt. Entfernt sie sich nämlich dahingehend von der Optimalzone 60, dass nunmehr der über den Kanal 28 vom Verdampfer 23 kommenden abgekühlten Luft zuviel Warmluft beigemischt wird, um die Ausblastemperatur nach Schritt 104 zu erhalten, so ist der Wärmebedarf der Luft zu groß, was bedeutet, dass die Luft durch den Verdampfer 23 zu stark abgekühlt worden ist. Daher wird in diesem Fall in Schritt 114 die Verdampfertemperatur mit einer Rate von beispielsweise 1,0°C/min erhöht.

Wird hingegen in Schritt 112 erkannt, dass der Anteil an Warmluft des Kanals 30, der der Kaltluft des Kanals 28 beigemischt wird, zu gering ist, besagt dies, dass nunmehr die Ausblastemperatur etwa dann, wenn sie auf Grund veränderter Bedingungen abgesenkt werden muss, nicht mehr ausreichend gut regelbar ist, da der noch bis zum endgültigen Schließen des Kanals 30 verbleibende Verstellweg der Mischklappe 26 zu gering ist, um sich noch nennenswert auf eine beispielsweise wegen Störeinflüssen erforderliche Verringerung der Ausblastemperatur auszuwirken. In diesem Fall wird dann in Schritt 116 die Verdampfertemperatur um beispielsweise 1,0°C/min verringert, so dass nunmehr die Mischklappe 26 wieder zurück in Richtung einer den Kanal 30 weiter öffnenden Stellung bewegt wird.

Die Veränderungsraten der Verdampfertemperatur in den Schritten 114 und 116 beträgt in diesem Ausführungsbeispiel 1,0°C/min. Zweckmäßig ist es, die Verdampfertemperatur, falls erforderlich, z. B. etwa alle 20 Sekunden um z. B. 1/3°C zu verändern.

Im Anschluss an die Schritte 114 und 116 wird zum Ende gesprungen, um von dort aus beim Anfang zu beginnen, so dass aus Sicherheitsgründen wieder der Schritt 100 abgearbeitet wird. Sollte ein Entfeuchtungsmanagement nicht erforderlich sein, so wird mit der zuvor beschriebenen Verdampertemperaturregelung fortgefahren. Ist hingegen ein Entfeuchtungsmanagement bei Schritt 118 angezeigt, so wird mit Schritt 102 fortgefahren. Erst dann, wenn kein Entfeuchtungsmanagement mehr notwendig ist, wird bei der Innenraumtemperaturregelung wiederum auf den energieoptimierten Betrieb umgeschaltet und dementsprechend mit Schritt 104 fortgefahren. Bei der Bestimmung der Ausblastemperatur in Schritt 104 und dem Anfangswert für die Verdampfertemperatur in Schritt 106 kann auf die thermische Vorgeschichte des Fahrzeuges (Standzeit bzw. Fahrzeit) zurückgegriffen werden.

Bei der hier beschriebenen Klimaanlage lässt sich die Verdampfertemperatur in weiten Bereichen variieren. Dabei wird die Verdampfertemperatur derart bestimmt, dass zur Erzielung eines hohen Wirkungsgrades, das heißt zur Erzielung eines möglichst geringen Energieverbrauchs, ein hoher Reheat-Anteil im stationären Betrieb vermieden wird. Andererseits wird die Verdampfertemperatur aber auch derart gewählt, dass noch eine gute Regelbarkeit der Ausblastemperatur mittels der Mischklappe gewährleistet ist, wie es von konventionellen Klimaanlagen sowie bei dem Betrieb der hier beschriebenen Klimaanlage während des Feuchtemanagements gegeben ist. Da der Grad der Nacherwärmung der gekühlten Luft bis zum Erreichen der Ausblastemperatur nicht konstant ist, sondern von der benötigten Luftmenge, der thermischen Vorgeschichte des Fahrzeuges und anderen Einflussfaktoren dynamisch abhängig ist, wird die für eine im Hinblick auf den Energieverbrauch und die Regelbarkeit der Ausblastemperatur optimale Verdampfertemperatur adaptiv bestimmt, wie vorstehend beschrieben ist.

Die Erfindung wurde vorstehend anhand einer Klimaanlage mit mindestens einer Ausblastemperaturregelung erläutert, ist jedoch auch bei einer Klimaanlage mit einer Innenraumtemperaturregelung und ohne unterlagerte Ausblastemperaturregelung anwendbar.

### BEZUGSZEICHENLISTE

- 1: Ausführungsbeispiel
- 10: Klimaanlage
- 12: Fahrzeug
- 14: Gebläse
- 16: Frischluft-/Umluftklappe
- 18: Frischluft-Ansaugkanal
- 20: Innenraum
- 21: Umluftkanal
- 22: Kühlvorrichtung
- 23: Verdampfer
- 24: Heizvorrichtung
- 26: Mischklappe
- 28: Kanal
- 30: Kanal
- 32: Wärmetauscher
- 34: Luftverteilvorrichtung
- 36: Klappe
- 38: Klappe
- 40: Mannanströmöffnung
- 42: Defrosteröffnung
- 44: Fußraumausströmöffnung
- 46: Innenraum-Temperaturfühler
- 48: Steuergerät
- 50: Innenraumtemperatur-Sollwertgeber
- 52: Stellglied
- 54: Temperaturfühler
- 56: Ausblastemperaturfühler
- 57: Außentemperaturfühler
- 58: Steuereinheit
- 60: Optimalzone

## Patentansprüche

1. Klimaanlage für ein Fahrzeug, mit
- einer Kühlvorrichtung (22) zum Kühlen von Luft,
- einer stromab der Kühlvorrichtung (22) angeordneten Heizvorrichtung (24) zum Erwärmen der von der Kühlvorrichtung (22) gekühlten und dem Innenraum (20) des Fahrzeuges (12) zuzuführenden Luft,
- einem ersten Stellglied (52) für die Kühlvorrichtung (22) zum Verändern der Temperatur der von der Kühlvorrichtung (22) gekühlten Luft,
- einem zweiten Stellglied (26) für die Heizvorrichtung (24) zum Verändern der Temperatur der von der Heizvorrichtung (24) erwärmten Luft,
- einer zumindest wahlweise eine energieoptimierte Ausblastemperaturregelung durchführende Steuereinheit (58), die mit den beiden Stellgliedern (52,62) verbunden ist und diese Stellglieder (52,26) derart ansteuert, dass die in den Innenraum (20) des Fahrzeuges (12) einströmende Luft eine gewünschte Sollausblastemperatur aufweist,
**dadurch gekennzeichnet,**
**dass** die Steuereinheit
- eine Kühlvorrichtungs-Solltemperatur für die von der Kühlvorrichtung (22) gekühlte Luft vorgibt, wobei diese Kühlvorrichtungs-Solltemperatur um einen vorbestimmten Betrag geringer ist als die zu Beginn der energieoptimierten Ausblastemperaturregelung einzuhaltende Sollausblastemperatur,
- einen oberen und einen unteren Grenzwert für den Wärmebedarf vorgibt, der in der Heizvorrichtung der von der Kühlvorrichtung (22) gekühlten Luft zuzuführen ist, um diese Luft bis auf die Sollausblastemperatur zu erwärmen,
- das Stellglied (52) der Kühlvorrichtung (22) derart ansteuert, dass die von der Kühlvorrichtung (22) gekühlte Luft die Kühlvorrichtungs-Solltemperatur aufweist,
- das Stellglied (26) der Heizvorrichtung (24) derart ansteuert, dass der von der Kühlvorrichtung (22) gekühlten Luft der zur Erwärmung bis auf die Sollausblastemperatur erforderliche Istwärmebedarf zugeführt wird, dann, wenn der Istwärmebedarf kleiner als der untere Grenzwert ist, die Kühlvorrichtungs-Solltemperatur um ein vorgebbares Maß verringert und
- dann, wenn der Istwärmebedarf größer als der obere Grenzwert ist, die Kühlvorrichtungs-Solltemperatur um ein vorgebbares Maß erhöht.

2. Klimaanlage nach Anspruch 1, **dadurch gekennzeichnet, dass** die Veränderungsrate der Kühlvorrichtungs-Solltemperatur zwischen 0,1°C/min und 3°C/min beträgt und dass die Veränderung ein- oder mehrstufig erfolgt.

3. Klimaanlage nach Anspruch 1 oder 2, **dadurch gekennzeichnet, dass** die Kühlvorrichtungs-Solltemperatur zu Beginn der energieoptimierten Innenraumtemperatur bis zu einigen wenigen °C, insbesondere bis zu 4°C und vorzugsweise bis zu 3°C unterhalb der Sollausblastemperatur liegt.

4. Klimaanlage nach einem der Ansprüche 1 bis 3, **dadurch gekennzeichnet, dass** der obere und der untere Grenzwert für den Wärmebedarf derart gewählt ist, dass die Heizvorrichtung (24) die von der Kühlvorrichtung (22) gekühlte Luft um bis zu 12°C, vorzugsweise um bis zu 6°C und insbesondere um einen Wert zwischen 2°C und 5°C erwärmt.

5. Klimaanlage nach einem der Ansprüche 1 bis 4, **dadurch gekennzeichnet, dass** die Kühlvorrichtungs-Solltemperatur bis auf die Sollausblastemperatur anhebbar und bis auf maximal 15°C, vorzugsweise bis auf maximal 10°C und insbesondere bis auf maximal 6°C unterhalb der Sollausblastemperatur verringerbar ist.

6. Klimaanlage nach einem der Ansprüche 1 bis 5, **gekennzeichnet durch** einen Kühlvorrichtungs-Temperaturfühler (54) für die von der Kühlvorrichtung (22) gekühlte Luft und einen Ausblastemperaturfühler (56) für die von der Heizvorrichtung (24) erwärmte und dem Innenraum (20) zuzuführende Luft, wobei beide Temperaturfühler (54,56) mit der Steuereinheit (58) verbunden sind.

7. Klimaanlage nach einem der Ansprüche 1 bis 6, **dadurch gekennzeichnet, dass** die Steuereinheit (58) eine Innenraumtemperaturregelung mit unterlagerter Ausblastemperaturregelung durchführt.

8. Klimaanlage nach einem der Ansprüche 1 bis 7, **dadurch gekennzeichnet, dass** die Heizvorrichtung (24) luftseitig steuerbar ist und als Stellglied eine Mischklappe (26) zum Mischen eines direkt von der Kühlvorrichtung (22) kommenden ersten Luftstroms und eines zweiten Luftstroms aufweist, der ebenfalls von der Kühlvorrichtung (22) kommt, jedoch vor seiner Vermischung mit dem ersten Luftstrom ein Heizaggregat (32) der Heizvorrichtung (24) passiert.

9. Klimaanlage nach einem der Ansprüche 1 bis 8, **dadurch gekennzeichnet, dass** die Steuereinheit (58) dann, wenn eine Beschlagneigung im Innenraum zu befürchten ist, die Kühlvorrichtungs-Solltemperatur derart vorgibt, dass die dem Innenraum (20) zuzuführende Luft und/oder die Luft im Innenraum (20) in ausreichendem Maße entfeuchtet ist bzw. wird.

10. Klimaanlage nach Anspruch 9, **dadurch gekennzeichnet, dass** die Steuereinheit (58) bei einer zu befürchtenden Beschlagneigung die Kühlvorrichtungs-Solltemperatur auf einen festen Minimalwert vorgibt.

11. Klimaanlage nach Anspruch 9, **gekennzeichnet durch** einen mit der Steuereinheit (58) verbundenen Außentemperaturfühler (57), wobei die Steuereinheit (58) bei einer zu befürchtenden Beschlagneigung die Kühlvorrichtungs-Solltemperatur in Abhängigkeit von der Außentemperatur und insbesondere auf einen um einen festen Betrag unterhalb der Außentemperatur liegenden Wert vorgibt.
